(19) Europäisches Patentamt
European Patent Office
Office européen des brevets

(11) Veröffentlichungsnummer : **0 224 175 B1**

# (12) EUROPÄISCHE PATENTSCHRIFT

(45) Veröffentlichungstag der Patentschrift :
**06.02.91 Patentblatt 91/06**

(51) Int. Cl.$^5$ : **C09B 29/048**, C09B 29/09, D06P 1/18

(21) Anmeldenummer : **86115950.7**

(22) Anmeldetag : **18.11.86**

## (54) Azofarbstoffe.

Die Akte enthält technische Angaben, die nach dem Eingang der Anmeldung eingereicht wurden und die nicht in dieser Patentschrift enthalten sind.

(30) Priorität : **29.11.85 DE 3542232**

(43) Veröffentlichungstag der Anmeldung :
**03.06.87 Patentblatt 87/23**

(45) Bekanntmachung des Hinweises auf die Patenterteilung :
**06.02.91 Patentblatt 91/06**

(84) Benannte Vertragsstaaten :
**CH DE FR GB LI**

(56) Entgegenhaltungen :
**EP-A- 0 017 558**
**FR-A- 1 503 249**
**GB-A- 2 067 584**
**US-A- 4 395 368**
**US-A- 4 456 551**

(73) Patentinhaber : **BAYER AG**
**D-5090 Leverkusen 1 Bayerwerk (DE)**

(72) Erfinder : **Hamprecht, Rainer, Dr.**
**Im kerberich 25**
**D-5068 Odenthal 3 (DE)**

EP 0 224 175 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Patentanmeldung sind Dispersions-Azofarbstoffe der Formel

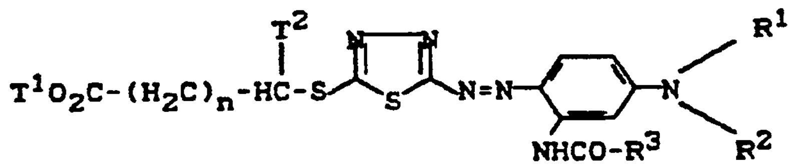 (I)

worin
$T^1$ Methyl, Ethyl, n-Propyl oder n-Butyl,
$T^2$ H, Methyl oder Ethyl,
n 0 oder 1,
$R^1$ $C_1$-$C_4$-Alkyl,
$R^2$ $C_1$-$C_4$-Alkyl und
$R^3$ H oder $C_1$-$C_5$-Alkyl bedeuten.

Bevorzugt sind solche Farbstoffe der Formel (I),
worin
$T^1$ Methyl oder Ethyl,
$T^2$ H oder Methyl und
$R^1$, $R^2$ Ethyl, n-Propyl oder n-Butyl und
$R^3$ $C_1$-$C_4$-Alkyl bedeuten.

Besonders bevorzugt sind Farbstoffe der Formel (I),
worin
$T^1$ Methyl oder Ethyl,
$T^2$ H,
n 0,
$R^1$ Ethyl, n-Propyl oder n-Butyl
$R^2$ Ethyl, n-Propyl oder n-Butyl und
$R^3$ Methyl, Ethyl oder n-Propyl bedeuten.

Ganz besonders bevorzugt sind Mischungen von Farbstoffen der Formel (I), deren Einzelkomponenten sich hinsichtlich der Reste
$T^1$ und/oder
$R^1$/$R^2$ und/oder
$R^3$ unterscheiden.

Dabei sind solche Mischungen als besonders wertvoll hervorzuheben, deren Einzelfarbstoffe sich hinsichtlich der Reste $T_1$ und/oder $R_1$/$R_2$ unterscheiden - jeweils in den obengenannten allgemeinen und speziellen Bedeutungen.

Man erhält diese Farbstoffe in üblicher Weise durch Diazotierung und Kupplung entsprechender Ausgangsmaterialien.

Die neuen Farbstoffe eignen sich hervorragend zum Bedrucken und Färben von synthetischen Fasermaterialien, insbesondere solchen aus Polyester- und Cellulosetriacetatfasern, die in einem klaren, roten Farbton gefärbt werden.

Die erhaltenen Färbungen zeichnen sich durch gute Allgemeinechtheiten aus. Hervorzuheben ist weiterhin die ausgezeichnete Thermomigrierechtheit, worin die neuen Farbstoffe nächstvergleichbaren bekannten Farbstoffen deutlich überlegen sind.

Im vergleich zu ähnlichen Farbstoffen gemäß US-A 36 57 215 bestehen darüberhinaus Vorteile in der Sublimierechtheit.

Gegenüber den konstituionell nächstvergleichbaren Farbstoffen aus JA 55/026264 zeigen die erfindungsgemäßen Farbstoffe ein besseres Ziehvermögen.

Von den nächstvergleichbaren Farbstoffen der FR-A 1 503 249 (insbesondere beispiele 8 und 14) unterscheiden sich die erfindungsgemäßen Farbstoffe durch das Fehlen der Alkoxygruppe in der Kupplungskomponente und die Anwesenheit einer unsubstituierten Dialkylaminogruppe in dem gleichen Rest.

Beispiel 1

Zu einer Mischung von 4,66 ml konz. (96%) Schwefelsäure und 5 ml 42%ige Nitrosylschwefelsäure tropft man bei 0°C eine Mischung von 25 ml Eisessig und 5 ml Propionsäure. Bei 0-5°C fügt man in kleinen Portionen 5,94 g 2-Amino-5-(methoxycarbonyl)-methylmercapto-1,3,4-thiadiazol zu und läßt noch 3 Stunden bei 0°C nachrühren.

Zu einer Lösung von 7,5 g 3-Diethylaminoacetanilid und 2 g Harnstoff in 100 ml Eisessig läßt man bei 0°C unter Zufügen von Eis die Lösung der Diazotierung zulaufen. Man füllt mit Eiswasser auf ein Volumen von 600 ml auf, läßt 2 Stunden nachrühren und isoliert den Farbstoff der Formel

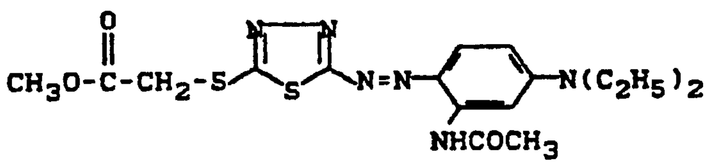

durch Absaugen. Man wäscht neutral und trocknet bei 50°C.

Ausbeute : 8,9 g

$\lambda_{max}$ : 528 nm (DMF)

Analog werden die folgenden Farbstoffe der Formel (I) hergestellt :

| Bsp.Nr. | $T^1$ | $T^2$ | $R^1$ | $R^2$ | $R^3$ | n | Nuance auf Polyester |
|---|---|---|---|---|---|---|---|
| 2 | $CH_3$ | H | $n\text{-}C_3H_7$ | $n\text{-}C_3H_7$ | $CH_3$ | 0 | blaust. Rot |
| 3 | $CH_3$ | H | $n\text{-}C_4H_9$ | $n\text{-}C_4H_9$ | $CH_3$ | 0 | " |
| 4 | $CH_3$ | $CH_3$ | $C_2H_5$ | $C_2H_5$ | $CH_3$ | 1 | " |
| 5 | $CH_3$ | H | $C_2H_5$ | $C_2H_5$ | $C_3H_7$ | 0 | " |
| 6 | $CH_3$ | H | $C_2H_5$ | $C_2H_5$ | $C_4H_9$ | 0 | " |
| 7 | $C_2H_5$ | H | $C_2H_5$ | $C_2H_5$ | $CH_3$ | 0 | " |
| 8 | $C_2H_5$ | H | $C_2H_5$ | $C_2H_5$ | $C_2H_5$ | 0 | " |
| 9 | $C_2H_5$ | H | $C_2H_5$ | $C_2H_5$ | $C_3H_7$ | 0 | " |
| 10 | $C_2H_5$ | H | $C_3H_7$ | $C_3H_7$ | $CH_3$ | 0 | " |
| 11 | $C_2H_5$ | H | $C_3H_7$ | $C_3H_7$ | $C_2H_5$ | 0 | " |
| 12 [50 % | $CH_3$ | H | $C_2H_5$ | $C_2H_5$ | $CH_3$ | 0 | " |
| 50 % | $C_2H_5$ | H | $C_2H_5$ | $C_2H_5$ | $CH_3$ | 0 | " |
| 13 [50 % | $CH_3$ | H | $C_2H_7$ | $C_3H_7$ | $CH_3$ | 0 | " |
| 50 % | $CH_3$ | H | $C_3H_7$ | $C_3H_7$ | $CH_3$ | 0 | " |
| 14 [50 % | $C_2H_5$ | H | $C_2H_5$ | $C_2H_5$ | $CH_3$ | 0 | " |
| 50 % | $C_2H_5$ | H | $C_3H_7$ | $C_3H_7$ | $CH_3$ | 0 | " |
| 15 [50 % | $CH_3$ | H | $C_2H_5$ | $C_2H_5$ | $CH_3$ | 0 | " |
| 50 % | $CH_3$ | H | $C_2H_5$ | $C_2H_5$ | $C_3H_7$ | 0 | " |
| 16 [33,3% | $CH_3$ | H | $C_2H_5$ | $C_2H_5$ | $CH_3$ | 0 | " |
| 33,3% | $CH_3$ | H | $C_3H_7$ | $C_3H_7$ | $CH_3$ | 0 | " |
| 33,3% | $C_2H_5$ | H | $C_2H_5$ | $C_2H_5$ | $CH_3$ | 0 | " |
| 17 [25 % | $CH_3$ | H | $C_2H_5$ | $C_2H_5$ | $CH_3$ | 0 | " |
| 25 % | $CH_3$ | H | $C_3H_7$ | $C_3H_7$ | $CH_3$ | 0 | " |
| 25 % | $C_2H_5$ | H | $C_2H_5$ | $C_2H_5$ | $CH_3$ | 0 | " |
| 25 % | $C_2H_5$ | H | $C_3H_7$ | $C_3H_7$ | $CH_3$ | 0 | " |

| Bsp.Nr. | | $T^1$ | $T^2$ | $R^1$ | $R^2$ | $R^3$ | n | Nuance auf Polyester |
|---|---|---|---|---|---|---|---|---|
| 18 | 50 % | $CH_3$ | H | $C_2H_5$ | $C_2H_5$ | $CH_3$ | 0 | blaust. Rot |
| | 50 % | $CH_3$ | H | $C_2H_5$ | $C_2H_5$ | $C_2H_5$ | 0 | " |
| 19 | 50 % | $CH_3$ | H | $C_2H_5$ | $C_2H_5$ | $C_2H_5$ | 0 | " |
| | 50 % | $CH_3$ | H | $C_2H_5$ | $C_2H_5$ | $C_3H_7$ | 0 | " |
| 20 | 33,3% | $CH_3$ | H | $C_2H_5$ | $C_2H_5$ | $CH_3$ | 0 | " |
| | 33,3% | $CH_3$ | H | $C_2H_5$ | $C_2H_5$ | $C_2H_5$ | 0 | " |
| | 33,3% | $CH_3$ | H | $C_2H_5$ | $C_2H_5$ | $C_3H_7$ | 0 | " |
| 21 | 33,3% | $CH_3$ | H | $C_2H_5$ | $C_2H_5$ | $CH_3$ | 0 | " |
| | 33,3% | $C_2H_5$ | H | $C_2H_5$ | $C_2H_5$ | $CH_3$ | 0 | " |
| | 33,3% | $CH_3$ | H | $C_2H_5$ | $C_2H_5$ | $C_2H_5$ | 0 | " |
| 22 | | $CH_3$ | $CH_3$ | $C_2H_5$ | $C_2H_5$ | $CH_3$ | 1 | " |
| 23 | | $C_2H_5$ | H | $C_2H_5$ | $C_2H_5$ | $CH_3$ | 1 | " |
| 24 | | $CH_3$ | H | $C_2H_5$ | $C_2H_5$ | $C_2H_5$ | 1 | " |
| 25 | | $CH_3$ | H | $C_3H_7$ | $C_3H_7$ | $CH_3$ | 1 | " |

## Ansprüche

1. Azofarbstoffe der Formel

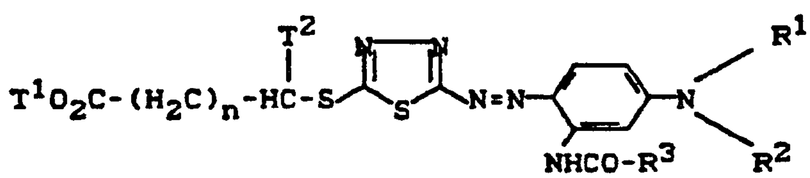

(I)

worin

$T^1$ Methyl, Ethyl, n-Propyl oder n-Butyl,
$T^2$ H, Methyl oder Ethyl,
n 0 oder 1,
$R^1$ $C_1$-$C_4$-Alkyl,
$R^2$ $C_1$-$C_4$-Alkyl und
$R^3$ H oder $C_1$-$C_5$-Alkyl bedeuten.

2. Azofarbstoffe gemäß Anspruch 1, dadurch gekennzeichnet, daß
$T^1$ Methyl oder Ethyl,
$T^2$ H oder Methyl und
$R^1$, $R^2$ Ethyl, n-Propyl oder n-Butyl und
$R^3$ $C_1$-$C_4$-Alkyl bedeuten.

3. Azofarbstoffe gemäß Anspruch 1, dadurch gekennzeichnet, daß
$T^1$ Methyl oder Ethyl,
$T^2$ H,
n 0,
$R^1$ Ethyl, n-Propyl oder n-Butyl
$R^2$ Ethyl, n-Propyl oder n-Butyl und
$R^3$ Methyl, Ethyl oder n-Propyl bedeuten.

4. Azofarbstoff gemäß Anspruch 1 der Formel

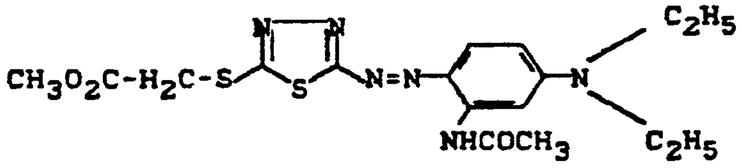 (I)

5. Mischungen von Azofarbstoffen der in Anspruch 1 angegebenen Formel, dadurch gekennzeichnet, daß sich deren Einzelkomponenten hinsichtlich der Reste
$T^1$ und/oder
$R^1$/$R^2$ und/oder
$R^3$ unterscheiden.

6. Mischungen von Azofarbstoffen gemäß Anspruch 5, dadurch gekennzeichnet, daß sich deren Einzelkomponenten hinsichtlich der Reste
$T_1$ und/oder $R_1$, $R_2$ unterscheiden.

7. Mischungen von Azofarbstoffen gemäß Anspruch 5, dadurch gekennzeichnet, daß diese neben dem Farbstoff gemäß Anspruch 4 einen Farbstoff der Formel

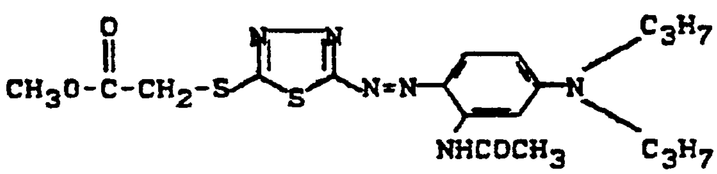

enthalten.

8. Mischungen von Azofarbstoffen gemäß Anspruch 5, dadurch gekennzeichenet, daß diese neben dem Farbstoff gemäß Anspruch 4 einen Farbstoff der Formel

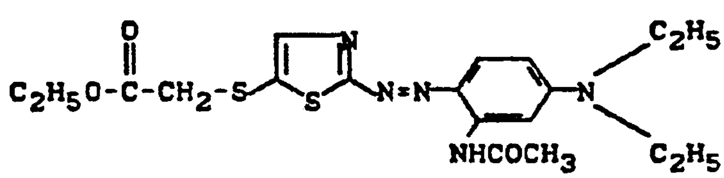

enthalten.

9. Verfahren zum Färben und Bedrucken von synthetischen Fasermaterialien, dadurch gekennzeichnet, daß man Farbstoffe oder Farbstoffgemische gemäß Ansprüchen 1-8 verwendet.

**Revendications**

1. Colorants azoïques de formule :

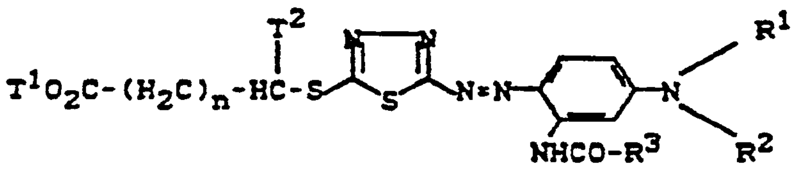

(I)

dans laquelle

$T^1$ représente un groupe méthyle, éthyle, n-propyle ou n-butyle,
$T^2$ représente H ou un groupe méthyle ou éthyle,
n est égal à 0 ou 1,
$R^1$ représente un groupe alkyle en $C_1$-$C_4$,
$R^2$ représente un groupe alkyle en $C_1$-$C_4$ et
$R^3$ représente H ou un groupe alkyle en $C_1$-$C_5$.

2. Colorants azoïques selon la revendication 1, caractérisés en ce que
$T^1$ représente un groupe méthyle ou éthyle,
$T^2$ représente H ou un groupe méthyle et
$R^1$, $R^2$ représentent éthyle, n-propyle ou n-butyle et
$R^3$ représente un groupe alkyle en $C_1$-$C_4$.

3. Colorants azoïques selon la revendication 1, caractérisés en ce que
$T^1$ représente un groupe méthyle ou éthyle,
$T^2$ représente H,
n est égal à 0,
$R^1$ représente un groupe éthyle, n-propyle ou n-butyle,
$R^2$ représente un groupe éthyle, n-propyle ou n-butyle et
$R^3$ représente un groupe méthyle, éthyle ou n-propyle.

4. Colorant azoïque selon la revendication 1 de formule :

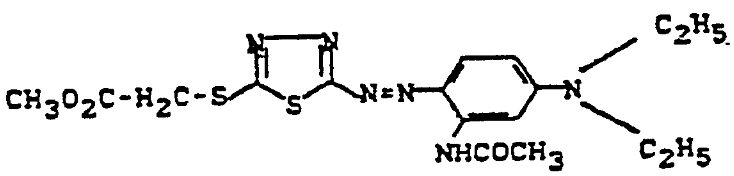

5. Mélanges de colorants azoïques répondant à la formule indiquée dans la revendication 1, caractérisés en ce que leurs composants individuels diffèrent par les restes
$T^1$ et/ou
$R^1$/$R^2$ et/ou
$R^3$

6. Mélanges de colorants azoïques selon la revendication 5, caractérisés en ce que les composants individuels diffèrent par les restes

$T^1$ et/ou $R^1$, $R^2$.

7. Mélanges de colorants azoïques selon la revendication 5, caractérisés en ce qu'ils contiennent en plus du colorant selon la revendication 4 un colorant de formule :

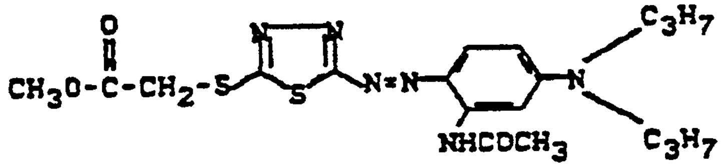

8. Mélanges de colorants azoïques selon la revendication 5, caractérisés en ce qu'ils contiennent en plus du colorant selon la revendication 4, un colorant de formule :

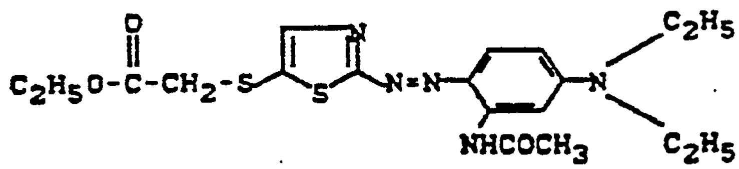

9. Procédé pour la teinture et l'impression de matières en fibres synthétiques, caractérisé en ce que l'on utilise des colorants ou mélanges de colorants selon les revendications 1 à 8.

**Claims**

1. Azo dyes of the formula

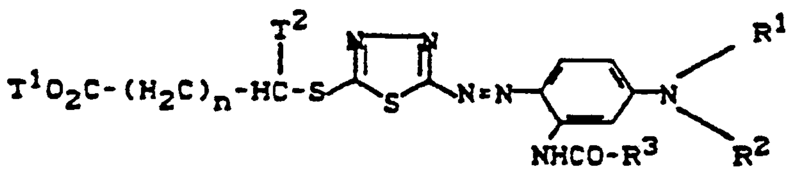

(I)

in which
$T^1$ denotes methyl, ethyl, n-propyl or n-butyl,
$T^2$ denotes H, methyl or ethyl,
n denotes 0 or 1,
$R^1$ denotes $C_1$-$C_4$-alkyl,
$R^2$ denotes $C_1$-$C_4$-alkyl and
$R^3$ denotes H or $C_1$-$C_5$-alkyl.

2. Azo dyes according to Claim 1, characterized in that
$T^1$ denotes methyl or ethyl,
$T^2$ denotes H or methyl and
$R^1$ and $R^2$ denote ethyl, n-propyl or n-butyl and
$R^3$ denotes $C_1$-$C_4$-alkyl.

3. Azo dyes according to Claim 1, characterized in that
$T^1$ denotes methyl or ethyl,
$T^2$ denotes H,
n denotes 0,
$R^1$ denotes ethyl, n-propyl or n-butyl,
$R^2$ denotes ethyl, n-propyl or n-butyl and
$R^3$ denotes methyl, ethyl or n-propyl.

4. Azo dye according to Claim 1, of the formula

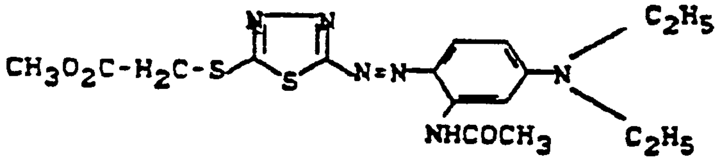

(I)

5. Mixtures of azo dyes of the formula stated in Claim 1, characterized in that their individual components differ regarding the radicals $T^1$ and/or $R^1$/$R^2$ and/or $R^3$.

6. Mixtures of azo dyes according to Claim 5, characterized in that their individual components differ regarding the radicals $T^1$ and/or $R^1$, $R^2$.

7. Mixtures of azo dyes according to Claim 5, characterized in that they contain, in addition to the dye

according to Claim 4, a dye of the formula

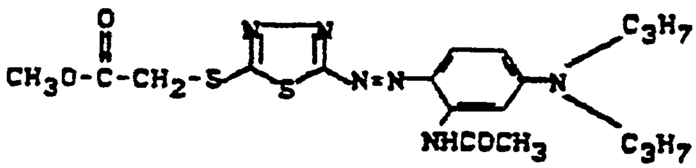

8. Mixtures of azo dyes according to Claim 5, characterized in that they contain, in addition to the dye according to Claim 4, a dye of the formula

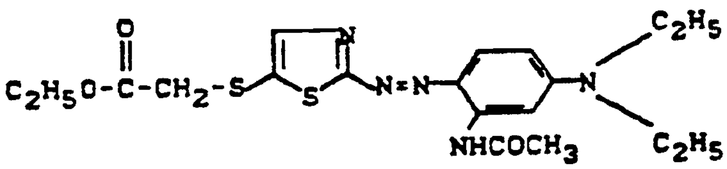

9. Process for dyeing and printing of synthetic fibre materials, characterized in that dyes or dye mixtures according to Claims 1-8 are used.